Europäisches Patentamt

European Patent Office

Office européen des brevets

(11) Publication number: **0 141 259**
**B1**

## EUROPEAN PATENT SPECIFICATION

(45) Date of publication of patent specification: **07.06.89**

(51) Int. Cl.⁴: **G 01 N 30/14, G 01 N 30/34**

(21) Application number: **84111529.8**

(22) Date of filing: **03.03.82**

(60) Publication number of the earlier application in accordance with Art. 76 EPC: **0 060 082**

(54) Improvements in liquid chromatography.

(30) Priority: **09.03.81 US 241945**

(43) Date of publication of application:
**15.05.85 Bulletin 85/20**

(45) Publication of the grant of the patent:
**07.06.89 Bulletin 89/23**

(84) Designated Contracting States:
**AT BE CH DE FR GB IT LI LU NL SE**

(56) References cited:
**FR-A-1 445 835**
**US-A-3 649 498**
**US-A-3 690 835**
**US-A-3 706 381**

(73) Proprietor: **ENVIRONMENTAL SCIENCES ASSOCIATES, INC.**
**45 Wiggins Avenue**
**Bedford Massachusetts 01730 (US)**

(72) Inventor: **Matson, Wayne R.**
**Harvard Road**
**Ayer Massachusetts (US)**

(74) Representative: **Sommerville, John Henry et al**
**SOMMERVILLE & RUSHTON 11 Holywell Hill**
**St. Albans Hertfordshire, AL1 1EZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to improvements in liquid chromatography, and in particular to improved methods for analyzing sample materials using chromatographic techniques.

Liquid chromatography is a well-known analytical technique in which a sample material is separated into its component species by dissolving the sample material in a carrier fluid to form a mobile phase which is then passed continuously through a solid phase. Generally the solid phase comprises a bed of ion exchange resins in powder or bead form, arranged in a stack or column. The various species contained in the sample material separate as a result of their different values of attraction for the various ion exchange resins in the bed to produce a so-called eluant solution which is then passed through a detection device. Classically, detection devices for liquid chromatography have been based on measurements of optical phenomena such as differences in indices of refraction or ultraviolet absorption of the various species in the chromatographic eluant.

Two prerequisites for commercial chromatography systems are: (1) sharp separation by the solid phase of the various species in the sample so that individual species will appear at different times in the eluant, i.e. the sample is resolved into its component species; and (2) convenient means of continuously and accurately detecting and analyzing the separated species in the eluant. At the current state of the art chromatographic separation generally can be achieved at a level of selectivity that is substantially more precise than the level of sensitivity of detection achieveable using classical optically based detection devices. More recently, detection devices based on electrochemical measurements have been proposed for use in connection with liquid chromatography separations. One such proposed electrochemical detection device employs a hanging drop mercury electrode suspended in the eluant solution. However, as noted in U.S. Patent 3706381, detectors employing hanging drop mercury electrodes have not proved to be entirely satisfactory due to the considerable noise associated with the dropping mercury. It has also been proposed to employ solid electrodes for directly measuring species in an eluant solution. One such proposed device employs a test electrode in the form of a solid graphite button or a carbon or graphite paste flat plate for contacting the eluant stream from a liquid chromatography column. However, electrochemical detection devices of this type generally are able to achieve sensitivity of 100 picograms at best, and may suffer from decay of sensitivity. Also, while electrochemical detection devices employing carbon or graphite paste electrodes may function well for many applications of reverse-phase chromatography, problems can develop when nonaqueous solvents are used due to the combination of a high volume flow rate with the mechanical instability of the carbon paste matrix. In addition, the relatively high electrical resistance of nonaqueous mobile phases can limit the linear range (on the high end) of thin layer amperometric detectors due to ohmic potential losses along the thin-layer channel. Another disadvantage of known electrochemical detection devices is that such devices generally rely on measuring changes in charge transfer phenomena; thus known electrochemical detection devices generally are limited in use to detecting only those materials capable of undergoing charge transfer.

In my Application EP-A-0033188 (published on 05.08.81), I disclose an electrochemical detection apparatus of extreme sensitivity which essentially comprises a flow cell having at least one active testing electrode at least one reference electrode, and at least one counter electrode. Each electrode comprises a liquid impervious solid body having a bore extending therethrough with the electrode active surface located in the bore. The electrodes are arranged in a stack, electrically insulated from one another with their respective bores aligned so as to define a flow channel through which liquid to be detected can be passed. The flow cell includes a holder assembly defining a flow path and having an inlet for directing a stream of solution into the cell and an outlet for directing solution from the cell. The flow cell is encapsulated within an impact resistant, chemically resistant, electrically insulating material. Various electrochemical responses are achieved by varying the construction, number and arrangement of electrodes in the stack, and the potentials applied to the electrodes. While the electrochemical detection apparatus of my aforesaid Application EP-A-0033188 overcomes many of the aforesaid problems of the prior art, problems still subsist due to interference signals from electrochemically active materials in the mobile phase, and/or insufficient separation of species in the chromatography column.

U.S. Patent 3,997,836 discloses a flow cell encapsulated within a high impact resistant, chemically resistant, chemically insulating material, with fittings extending in part beyond the encapsulation. The flow cell of said U.S. Patent 3,997,836 is disposed downstream of a chromatography column. Thus disposed the flow cell suffers from similar problems due to interference signals from electrochemically active materials in the mobile phase, and/or insufficient separation of species in the chromatography column. Yet other forms of electrochemical detection apparatus for use in chromatographic separations are disclosed in U.S. Patent Nos. 3,694,335 and 3,706,381. These systems also suffer from problems due to interference from electrochemically active materials in the mobile phase and/or separation of species in the chromatography column.

Finally, there is disclosed in DE-A-2,923,050 and its corresponding U.S. Patent 4,199,323, an analytical instrument for assaying aqueous and nonaqueous samples for salt, base and acid species concentration. In a preferred embodiment the apparatus includes a pair of diffuser or ionexchange columns having a flow-through conductivity cell located in-line between the columns. A second conductivity cell is located downstream of the second column.

It is thus a primary object of the present invention to provide a novel and improved chromatography system, i.e. process, which overcomes the aforesaid and other problems and limitations of the prior art.

In order to effect the foregoing and other objects there is provided in one aspect of the invention, a method of chromatographically analyzing a sample material wherein a sample is dissolved in a carrier fluid to form a mobile phase which is electrochemically treated prior to passing it through a chromatography column, characterised by electrochemically treating said carrier fluid by passing said carrier fluid through a flow cell having at least one active testing electrode, at least one reference electrode and at least one counter electrode and applying controlled testing potentials to said active testing electrode, a reference potential to said reference electrode, and a counter potential to said counter electrode, said controlled testing potential electrochemically reducing or oxidizing selected electroactive materials present in said mobile phase whereby to selectively change or remove electroactive materials therein prior to injecting said sample material into said carrier fluid.

In another aspect of the invention there is provided a method of analyzing a sample material by liquid chromatography wherein said sample is dissolved in a carrier fluid to form a mobile phase which is electrochemically treated prior to passing it through a chromatography column, characterised by electrochemically treating said mobile phase by passing said mobile phase through a flow cell having at least one active testing electrode, at least one reference electrode and at least one counter electrode, and applying controlled testing potentials to said active testing electrodes, a reference potential to said reference electrodes, and a counter potential to said counter electrodes, whereby to electrochemically oxidize or reduce selected electroactive materials present in said mobile phase thereby to change chromatographic characteristics of said selected materials therein.

The invention will now be described, by way of example, with reference to the accompanying drawings, in which:

Fig. 1 is a schematic view of one form of liquid chromatography apparatus and incorporating an electrochemical flow cell for use in the process in accordance with the present invention;

Fig. 2 is a side elevational view, partly in section, showing details of a preferred form of electrochemical flow cell portion of the apparatus of Fig. 1;

Fig. 3 is a cross sectional view of the electrochemical flow cell of Fig. 2, taken along lines 3-3;

Fig. 4 is a schematic view of an alternative liquid chromatography apparatus employing an electrochemical flow cell for use in the process in accordance with the present invention;

Fig. 5 is a schematic view of still another alternative form of liquid chromatography apparatus employing an electrochemical flow cell for use in the process in accordance with the present invention; and

Fig. 6 is a series of chart recordings showing measurements made on the eluant from a liquid chromatography apparatus and illustrating the advantages of the present invention.

Further understanding of the features and advantages of the present invention will be had from the following detailed description of the invention which illustrates a preferred form of electrochemical flow cell of the present invention in combination with a liquid chromatography separation apparatus and an electrochemical detection cell as used in accordance with the method of the present invention. It will be understood, however, that the method of the present invention may be advantageously employed in combination with a liquid chromatography separation apparatus employing a conventional optical detection device.

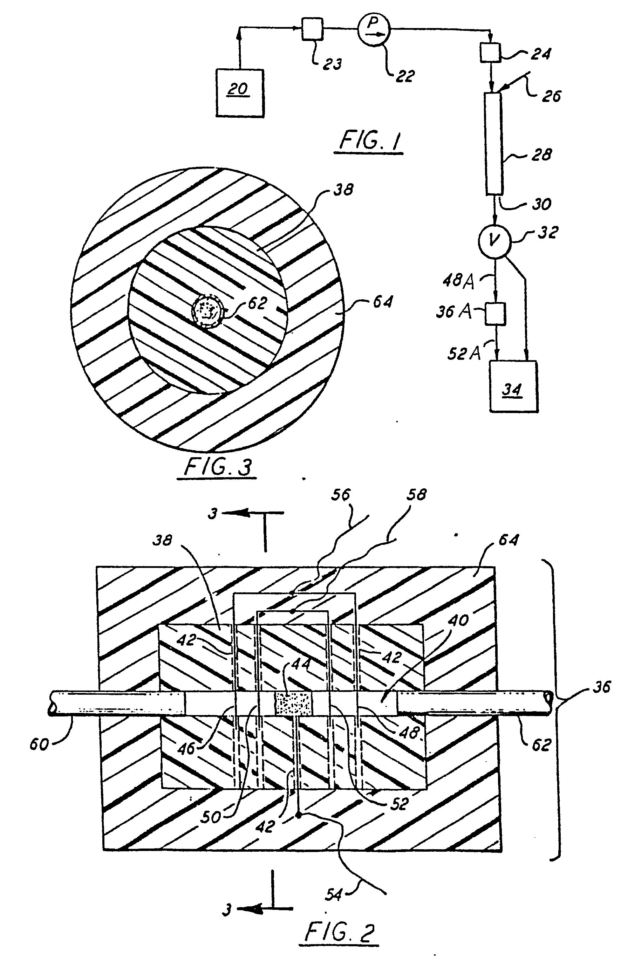

Referring to Fig. 1, there is illustrated a liquid chromatography apparatus for use in accordance with the process of the present invention. The illustrated liquid chromatography apparatus which is made in accordance with my copending (parent) application Serial No. EPO 82301069.6 (EP-A-60082) includes a mobile phase reservoir 20 coupled through a constant volume pump means 22, an electrochemical flow cell 23 (as will be described in detail hereinafter), and an injection valve 24 and sample inlet 26 to the top of a liquid chromatography column indicated generally at 28. In practice, sample materials to be tested are introduced into the chromatography apparatus either by direct injection of microliter amounts of sample material into the chromatography column 28, e.g. through a syringe at sample inlet 26, or the sample material may be introduced into the chromatography column 28 as a dilute solution of sample material at injection valve 24. Thus, if desired, either injection valve 24 or sample inlet 26 may be omitted from the system. Chromatography column 28 is packed with selected ion exchange resins in bed or powder form. The selection of the mobile phase, and the selection and packing order of the ion exchange resins will depend on the particular separations desired and can readily be determined by one skilled in the art and thus will not be further described herein. The base of chromatography column 28 is coupled via an outlet 30 to a splitter valve 32 which divides the eluant from the chromatography column 28 between a sample collection vessel or waste container 34 and a detection device indicated generally at 36A.

The illustrated chromatography apparatus (less electrochemical flow cell 23) is conventional and may be of the type described by P. H.

Freeman and W. L. Zielinski in U.S. Bureau of Standards Technological Note Number 589, Page 1 (July 1980 to June 1979).

Referring to Figs. 2 and 3, electrochemical flow cell 23, indicated generally at 36, comprises a hollow cylindrical body 38 formed of a rigid, liquid impervious, electrically insulating, chemically inert material such as a synthetic polymeric material, e.g. an unplasticised polyvinyl chloride, polypropylene, a polytetrafluoroethylene fluorocarbon resin such as Teflon®, Kel-F®, Halar®, Fluoron® or other commercially available polymeric material. Cylindrical body 38 defines an elongate cylindrical flow path 40 in which are located the individual electrodes of electrochemical flow cell 23, as will be described in detail hereinafter. A plurality of radial drillings or bores 42 are formed through the side wall of body 38 and provides entry for electrical connections to the electrodes located within flow path 40.

As mentioned supra, electrochemical flow cell 23 has at least one working electrode, at least one reference electrode and at least one counter electrode. A preferred form of cell 23 shown in Figs. 2 and 3 comprises five electrically discrete electrode elements arranged as follows: — an active testing electrode 44, two counter electrodes 46 and 48, and two reference electrodes 50 and 52. Active testing electrode 44 comprises a short cylindrical body or frit formed of an electrically conductive, chemical inert, porous electrode base material such as a porous metal or graphite. By nature of its porosity testing electrode 44 has a relatively high active surface area. Counter electrodes 46 and 48 also may comprise frits of similar porous electrode base material, but preferably counter electrodes 46 and 48 comprise inert metal terminals such as one wire or a plurality of palladium or platinum wires. Reference electrodes 50 and 52 comprise inert metal terminals such as one wire or a plurality of palladium, palladium oxide or platinum wires. Preferably, reference electrodes 50 and 52 are closely spaced from and equidistant from active testing electrode 44, while counter electrodes 46 and 48 are located further away from testing electrode 44.

Active testing electrode 44, counter electrodes 46 and 48, and reference electrodes 50 and 52 are connected via palladium or platinium wires 54, 56 and 58 to sources of controlled testing potential, counter potential and reference potential, respectively.

Completing flow cell 23 are a pair of rigid, high pressure resistent terminations such as stainless steel tubing segments 60 and 62. The latter are jam fitted into the respective ends of body 38 flow path 40, and body 38 in its entirety and tubing segments 60 and 62 in part, are potted or encapsulated within a high impact resistant, chemically resistant, electrically insulating material such as an epoxy resin indicated generally 64. As seen in Fig. 2, tubing segments 60 and 62 extend beyond the epoxy potting in part to permit connection of cell 23 in line in the chromatography system. Alternatively, fittings may be molded integrally with the epoxy resin body 64, for example, as internally threaded fittings in place of tubing segments 60 and 62. Cell 23 may be placed at various points in a chromatography system as will be described in detail hereinbelow.

Fig. 1 shows the placement of a flow cell 23 upstream of injection valve 24. With cell 23 located at this position in a chromatography system, it can, through appropriate application of electrical potentials to the cell, act as a screen to remove selected electrochemically active materials in the mobile phase used to elute column 28, thus reducing background level of contaminants reaching the column and eluting from the column. This in turn may reduce background signals and thus enhance operation of the downstream detector device 36 and/or permit the use of certain mobile phase combinations with UV or fluorescent detectors which ordinarily could not be used with such detectors. Removal of certain contaminants also may increase column life.

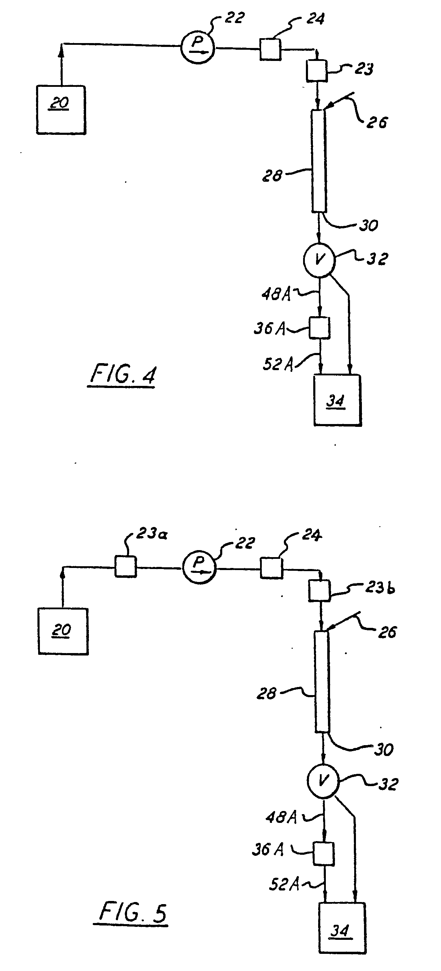

Fig. 4 illustrates the placement of flow cell 23 immediately downstream of injection valve 24. With cell 23 located at this position in a chromatography system, one can, through appropriate application of electrical potentials to the cell, electrochemically modify (i.e. oxidize or reduce) selected materials injected into the column, thereby changing the material's chromatographic characteristics whereby to permit chromatographic separations that might otherwise be impossible.

Fig. 5 illustrates the placement of two flow cells 23a, 23b respectively, made in accordance with the present invention, in a chromatography system, upstream and downstream of injection valve 24. This embodiment provides both screening and materials modification.

Further understanding of the principles and advantages of the present invention may be had by reference to the following examples which illustrate the use of the electrochemical detection device in accordance with the present invention.

EXAMPLE I

An electrochemical flow cell 23 made in accordance with Figs. 2 and 3 was used. The cell comprised one active testing electrode 44 formed of graphite with $0.8\mu m$ pore size 50% porosity, two palladium oxide wire reference electrodes 50 and 52 and two palladium wire counter electrodes 46 and 48. The flow cell 23 was located in line upstream of injection valve 24, i.e. as shown in Fig. 1.

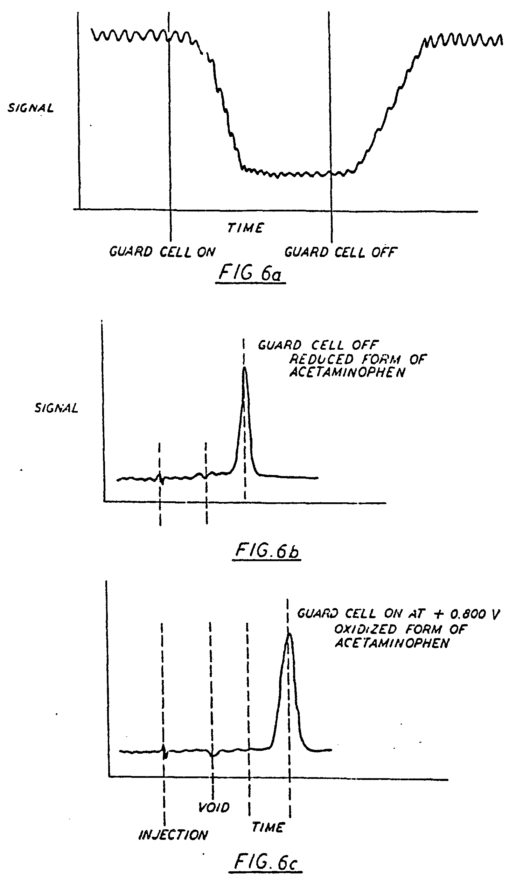

The basic procedure was to dissolve small amounts of Acetaminophen in methyl alcohol/phosphoric acid/water matrix (30% methyl alcohol, 70% water, 0.01% $H_3PO_4$) to form an eluant solution. The sample solution was then introduced into a Model 848 (TM) liquid chromatography system (available from E. I. DuPont de Nemours and Co.). The chromatography column was packed with a Zorbax- C-8 (TM) column packing from E. I. DuPont de Nemours and Co. (The manufacturer describes the packing as comprising an eight-carbon hydrocarbon on an inert carrier). Flow rate through the chromatography column was 1.5 ml/min, with an inlet pressure of $22.06304 \times 10^6$ Pa. The eluant from the chromatography column was run through an electrochemical detection cell (Model No. 5100$^{(TM)}$ available from Environmental Sciences Associates, Inc.). The electrical signal outputs from the electrochemical detection cell were recorded on an automatic recorder and shown in Fig. 6a with the flow cell 23 turned on (+0.9V) and off. As can be seen in Fig. 6a flow cell 23 provides substantial suppression of background signals.

EXAMPLE II

Example I was repeated with the following change: — Flow cell 23 was located between injection valve 24 and chromatography column 28. The electrical signal outputs from the electrochemical detection cell 36 were recorded as before on an automatic recorder and shown in Fig. 6b and Fig. 6c with the flow cell 23 turned on (+0.8V) and off. As can be seen in Fig. 6b and Fig. 6c flow cell 23 provides a substantial shift in retention time for the oxidized form of Acetaminophen.

Additional cells set at other potentials may be included in line to further suppress background and/or to further modify other selected materials to change their chromatographic characteristics.

As should be clear from the foregoing the inclusion of electrochemical flow cell 23 in accordance with the present invention offers a number of advantages in liquid chromatography.

## Claims

1. A method of analyzing a sample material by liquid chromotography wherein said sample is dissolved in a carrier fluid to form a mobile phase which is electrochemically treated prior to passing it through a chromatography column, characterized by electrochemically treating said carrier fluid by passing said carrier fluid through a flow cell (23, 36) having at least one active testing electrode (44), at least one reference electrode (50, 52) and at least one counter electrode (46, 48), and applying controlled testing potentials to said active testing electrode, a reference potential to said reference electrode, and a counter potential to said counter electrode, said controlled testing potential electrochemically reducing or oxidizing selected electroactive materials present in said mobile phase whereby to selectively change or remove electroactive materials therein prior to injecting said sample material into said carrier fluid.

2. A method of analyzing a sample material by liquid chromatography wherein said sample is dissolved in a carrier fluid to form a mobile phase which is electrochemically treated prior to passing it through a chromatography column, characterized by electrochemically treating said mobile phase by passing said mobile phase through a flow cell (23, 36) having at least one active testing electrode (44), at least one reference electrode (50, 52) and at least one counter electrode (46, 48), and applying controlled testing potentials to said active testing electrodes, a reference potential to said reference electrodes, and a counter potential to said counter electrodes, whereby to electrochemically oxidize or reduce selected electroactive materials present in said mobile phase thereby to change chromatographic characteristics of said selected materials therein.

## Patentansprüche

1. Verfahren zur Untersuchung einer Stoffprobe durch Flüssigkeitschromatografie, bei welchem die Probe in einem Trägerfluid aufgelöst ist, um eine mobile Phase zu bilden, die vor dem Durchgang durch eine Chromatografiesäule elektrochemisch behandelt ist, gekennzeichnet, durch elektrochemisches Behandeln des Trägerfluids, indem man das Trägerfluid eine Durchflußzelle (23, 36) passieren läßt, die mindestens eine aktive Testelektrode (44), mindestens eine Referenzelektrode (50, 52) und mindestens eine Gegenelektrode (46, 48) aufweist und durch Aufbringen von gesteuerten Testpotentialen auf die aktive Testelektrode, eines Bezugspotentials auf die Bezugselektrode und eines Gegenpotentials auf die Gegenelektrode, wobei das gesteuerte Testpotential elektrochemisch die in der mobilen Phase vorhandenen selektierten elektroaktiven Stoffe reduziert oder oxydiert, wodurch sich darin befindliche elektroaktive Stoffe selektiv ändern oder abbauen, bevor man die Stoffprobe in das Trägerfluid injiziert.

2. Verfahren zur Untersuchung einer Stoffprobe durch Flüssigkeitschromatografie, bei welchem die Probe in einem Trägerfluid aufgelöst ist, um eine mobile Phase zu bilden, die vor dem Durchgang durch eine Chromatografiesäule elektrochemisch behandelt ist, gekennzeichnet, durch elektrochemische Behandlung der mobilen Phase, indem man die mobile Phase eine Durchflußzelle (23, 36) passieren läßt, die mindestens eine aktive Testelektrode (44), mindestens eine Referenzelektrode (50, 52) und mindestens eine Gegenelektrode (46, 48) aufweist, sowie durch Aufbringen von gesteuerten Testpotentialen auf die aktiven Testelektroden, eines Referenzpotentials auf die Referenzelektroden und eines Gegenpotentials auf die Gegenelektroden, wodurch auf elektrochemische Weise in der mobilen Phase vorhandene selektierte elektroaktive Stoffe oxydieren oder reduzieren und sich dabei die chromatografischen Eigenschaften der darin enthaltenen selektierten Stoffe ändern.

## Revendications

1. Procédé d'analyse d'un échantillon de matière pour chromatographie liquide, dans lequel on dissout ledit échantillon dans un liquide vecteur pour former une phase mobile que l'on traite électrochimiquement avant de la faire passer à travers une colonne de chromatographie, caractérisé en ce que l'on traite électrochimiquement ledit liquide vecteur en le faisant passer à travers une cellule d'écoulement (23, 36) comportant au moins une électrode active d'analyse (44), au moins une électrode de référence (50, 52) et au moins une contre-électrode (46, 48), et l'on applique des potentiels d'analyse commandés à ladite électrode active d'analyse, un potentiel de référence à ladite électrode de référence, et un contre-potentiel à ladite contre-électrode, ledit potentiel d'analyse commandé ayant pour effet de réduire ou d'oxyder électrochimiquement des matières électro-actives sélectionnées, présentes dans ladite phase mobile, de façon à y modifier ou à en éliminer sélectivement des matières électro-actives avant que l'on injecte ledit échantillon de matière dans ledit liquide vecteur.

2. Procédé d'analyse d'un échantillon de matière pour chromatographie liquide, dans lequel on dissout ledit échantillon dans un liquide vecteur pour former une phase mobile que l'on traite électrochimiquement avant de la faire passer à travers une colonne de chromatographie, caractérisé en ce que l'on traite électrochimiquement ladite phase mobile en la faisant passer à travers une cellule d'écoulement (23, 36) comportant au moins une électrode active d'analyse (44), au moins une électrode de référence (50, 52) et au moins une contre-électrode (46, 48), et l'on applique des potentiels d'analyse commandés auxdites électrodes actives d'analyse, un potentiel de référence auxdites électrodes de référence, et un contre-potentiel auxdites contre-électrodes, pour réduire ou oxyder électrochimiquement des matières électro-actives sélectionnées, présentes dans ladite phase mobile, de façon à modifier des caractéristiques chromatographiques desdites matières sélectionnées dans cette phase mobile.

FIG. 1

FIG. 3

FIG. 2

*FIG. 4*

*FIG. 5*

SIGNAL

TIME

GUARD CELL ON          GUARD CELL OFF

*FIG 6a*

SIGNAL

GUARD CELL OFF
REDUCED FORM OF
ACETAMINOPHEN

*FIG.6b*

GUARD CELL ON AT + 0.800 V
OXIDIZED FORM OF
ACETAMINOPHEN

VOID

INJECTION          TIME

*FIG.6c*

3